# EUROPEAN PATENT APPLICATION

(11) **EP 3 200 067 A1**
(43) Date of publication of application: **02.08.2017**
(21) Application number: 17153400.1
(22) Date of filing: 26.01.2017
(51) Int. Cl.: G06F 3/14, H04N 21/414

(54) **ELECTRONIC APPARATUS AND CONTROL METHOD THEREOF**

(30) Priority: 29.01.2016 KR 20160011670
(71) Applicant: Samsung Electronics Co., Ltd., Gyeonggi-do 16677 (KR)
(72) Inventor: CHOI, Jin-wook, 16692 Gyeonggi-do (KR); KWON, Bo-kyun, 16543 Gyeonggi-do (KR)
(74) Representative: Taor, Simon Edward William

(57) **Abstract**

An electronic apparatus and a control method thereof are provided. The electronic apparatus includes a storage to store files corresponding to static sub contents and dynamic sub content, respectively, a communicator to communicate with an external apparatus, and a processor to provide a graphic user interface comprising a plurality of menu items to produce a content having a plurality of pages; in response to at least one static sub content and at least one dynamic sub content being included in any page from among the plurality of pages of the content produced, to generate a content package comprising a single image in which the at least one static sub content is included for the corresponding page and the at least one dynamic sub content, which is displayed on the single image, based on a user input on the UI; and to transmit the generated content package to the external apparatus.

## Description

Apparatuses and methods consistent with exemplary embodiments relate to an electronic apparatus, which produces and transmits an image content having a plurality of pages, and more particularly to an electronic apparatus and a control method thereof, which produces an image content in such a manner that at least one static sub content is included in a background according to a selection of user and transmitted to an external display apparatus to first display the background having the at least one static sub content therein, thereby removing a flicker of screen, when the image content is changed from one page to another at the external display apparatus.

Digital signages as digital display apparatuses capable of being remotely controlled via the network are digital media which are installed in public places or commercial spaces to provide various information, such as entertainments, advertisements, etc.

Recently, with the growth of digital signage industry, the digital signage apparatuses began to be installed in the existing advertisement market, such as off-line shopping malls and on street signboards and at present, were installed even in elevators of residential areas, to provide various advertisement images including still images, motion images and so on. This digital signage market is getting bigger.

More particularly, digital signages with which various information technologies (ITs) and content-related technologies are merged to support interactions for bidirectional communication, come into and are available on the market.

As contents for the digital signages increase in capacity and size, problems related to transmitting the contents are occurring.

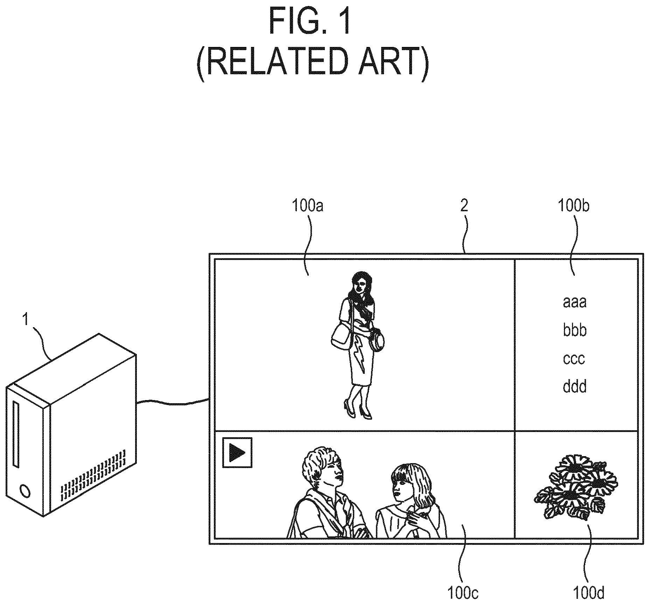

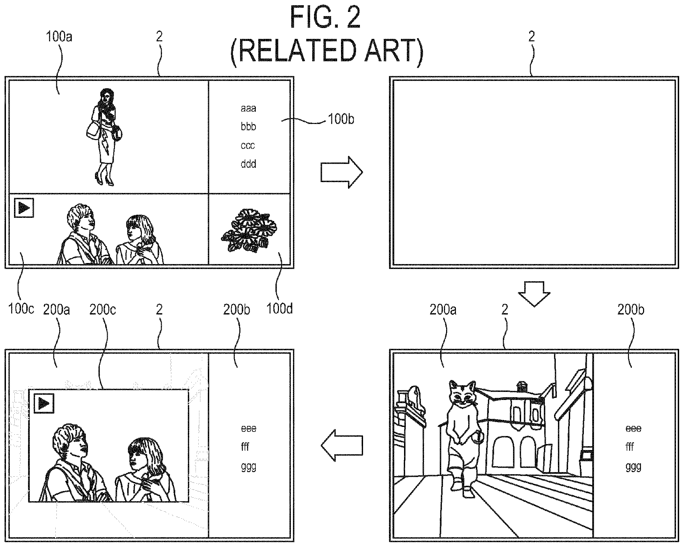

FIGS. 1 and 2 illustrate a related art digital signage system. A digital signage content may include a plurality of sub contents 100a to 100d. The plurality of sub contents 100a to 100d may include static sub contents 100a, 100b and 100d, which include images 100a and 100d and a text 100b, and a dynamic sub contents 100c, which includes a motion image or a flash image.

An electronic apparatus 1 as a device for producing an image content may be implemented by a computer or the like. The produced image content may be directly provided by wired or wireless to a digital signage 2, or transmitted to the digital signage 2 through a server via a network. The digital signage 2 is configured to display the received content.

A content file corresponding to the produced image content is managed in page unit. Referring to FIG.2, an example of changing pages while the digital signage 2 displays the content is illustrated. A picture on an upper left corner of FIG. 2 corresponds to a first page. When the first page is changed to a second page, a background is first displayed, as in a picture on an upper right corner of FIG. 2, before a plurality of sub contents 200a to 200c is processed. And then, static sub contents 200a and 200b are processed and displayed, as in a lower right corner of FIG. 2. A dynamic sub content 200c is lastly processed due to capacity problem and the produced content is displayed in entirety, as in a lower left corner of FIG. 2. In other words, to prevent a phenomenon that the screen is vacant without displaying anything before processing content elements to be displayed on the next page, the digital signage 2 first processes the background to display and then processes the sub contents 200a to 200c to display on the background. At this time, if there is no information on the background, a basic background is first displayed and the sub contents 200a to 200c are then displayed according to a processed order. However, since the background do not have a relation with the content elements to be displayed on the next page, problems may occur in that information passed on to the user is cut off and in that the screen flickers.

Exemplary embodiments address at least the above problems and/or disadvantages and other disadvantages not described above. Also, the exemplary embodiments are not required to overcome the disadvantages described above, and need not overcome any of the problems described above.

According to an aspect of an exemplary embodiment, there is provided an electronic apparatus including : a storage configured to store files corresponding to a plurality of static sub contents and a plurality of dynamic sub content, respectively; a user input receiver; a communicator configured to communicate with an external apparatus; and a processor configured: to provide a graphic user interface (GUI) comprising a plurality of menu items for producing a content having a plurality of pages; in response to at least one static sub content and at least one dynamic sub content being included in any page from among the plurality of pages of the content produced, to generate a content package comprising a single image in which the at least one static sub content is included for the any page and the at least one dynamic sub content, which is displayed on the single image while executing the content, based on a user input on the GUI received via the user input receiver; and to control the communicator to transmit the generated content package to the external apparatus.

The content package may include a content file comprising meta information to execute the content, and files corresponding to the single image and the at least one dynamic sub content included in the content, respectively.

The content file may be is configured to comprise a plurality of modes based on positions where the content file is executed and to, at a first mode, identify the at least one static sub content included in the content as separate objects to edit each the at least one static sub content if the content file is executed at the electronic apparatus.

The content file may be configured to, at a second mode, treat all the at least one static sub content included in the content as a background and to identify all at least one static sub content as an object if the content file is executed at the electronic apparatus.

The meta information may include information on at least one of positions, sizes and times that the at least one static sub content and the at least one dynamic sub content included in the content are displayed.

The meta information may include information for displaying the at least one dynamic sub content on the single image after displaying the single image when the external apparatus executed the content.

The at least one static sub content may include at least one of an image and a text.

The at least one dynamic sub content may include at least one of a motion image, a flash image, and a text on which an animation is set.

The GUI may further include a time setting item for setting up a time that the plurality of pages is automatically changed.

The processor may be configured to, if the at least one dynamic sub content included in the content partially overlaps with the at least one other static sub content therein, rearrange the at least one dynamic sub content on the GUI to display on top, while the content is edited by a user via the GUI.

The processor may be configured to, if the content comprises a plurality of dynamic sub contents, display the plurality of dynamic sub contents not to overlap each other on the GUI, while the content is edited by a user via the GUI.

According to an aspect of another exemplary embodiment, there is provided a control method of an electronic apparatus including: storing files corresponding to a plurality of static sub contents and a plurality of dynamic sub content, respectively; receiving a user input; communicating with an external apparatus; providing a graphic user interface (GUI) comprising a plurality of menu items for producing a content having a plurality of pages; in response to at least one static sub content and at least one dynamic sub content being included in any page from among the plurality of pages of the content produced, generating a content package comprising a single image in which the static sub content is included for the any page and the at least one dynamic sub content, which is displayed on the single image, based on a user input on the GUI; and transmitting the generated content package to the external apparatus.

The content package may include a content file comprising meta information to execute the content, and files corresponding to the single image and the at least one dynamic sub content included in the content, respectively.

The meta information may include information on at least one of positions, sizes and times that the at least one static sub content and the at least one dynamic sub content included in the content are displayed.

The meta information may include information for displaying the at least one dynamic sub content on the single image after displaying the single image when the external apparatus executed the content.

The at least one static sub content may include at least one of an image and a text.

The at least one dynamic sub content may include at least one of a motion image, a flash image, and a text on which an animation is set.

The method may further include setting up a time that the plurality of pages is automatically changed.

The method may further include, if the at least one dynamic sub content included in the content partially overlaps with the at least one other static sub content therein, rearranging the at least one dynamic sub content to display on top on the GUI, while the content is edited by a user via the GUI.

The method may further include, if the content comprises a plurality of dynamic sub contents, displaying the plurality of dynamic sub contents not to overlap each other on the GUI, while the content is edited by a user via the GUI.

According to an aspect of other exemplary embodiment, there is provided a non-transitory computer-readable recording medium on which is recorded a program for executing a control method of an electronic apparatus, as described above.

The above and other aspects, features, and advantages of certain embodiments of the present disclosure will be more apparent from the following description taken in conjunction with the accompanying drawings, in which:
FIG. 1 illustrates an example of a related art digital signage system;
FIG. 2 illustrates an example of changing pages at a related art digital signage system;
FIG. 3 is a block diagram showing an electronic apparatus according to an exemplary embodiment;
FIG. 4 illustrates an example of an image content production tool provided via a display according to an exemplary embodiment;
FIG. 5 illustrates an example of a related art content package;
FIG. 6 illustrates an example of a content package generated and provided at an electronic apparatus according to an exemplary embodiment;
FIG. 7 illustrates an implemented example of a digital signage system according to an exemplary embodiment;
FIG. 8 illustrates an example of changing pages according to an exemplary embodiment;
FIG. 9 illustrates an example that a content file is differently applied based on modes according to an exemplary embodiment;
FIG. 10 illustrates a concrete example of an image content production tool, which is operated not to cover a dynamic sub content with a static sub content according to an exemplary embodiment;
FIG. 11 illustrates a concrete example of an image content production tool, which is operated not to overlap dynamic sub contents each other according to an exemplary embodiment;
FIG. 12 illustrates a concrete example of an image content production tool, which is operated not to overlap dynamic sub contents each other according to an exemplary embodiment; and
FIG. 13 is a flow chart showing an operation of an electronic apparatus according to an exemplary embodiment.

Throughout the drawings, like reference numerals will be understood to refer to like parts, components, and structures.

The following description with reference to the accompanying drawings is provided to assist in a comprehensive understanding of various exemplary embodiments as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the exemplary embodiments. Accordingly, it should be apparent to those skilled in the art that the following description of various exemplary embodiments is provided for illustration purpose only and not for the purpose of limiting the exemplary embodiments as defined by the appended claims and their equivalents.

It is to be understood that the singular forms "a," "an," and "the" include plural referents unless the context clearly dictates otherwise. Thus, for example, reference to "a static or dynamic sub content" includes reference to one or more of such sub contents.

Some of the elements shown in accompanying drawings have been exaggerated, omitted or briefly illustrated, and the size of each element does not wholly reflect the actual size. The present disclosure is not limited by the relative size or interval shown in accompanying drawings.

If an element is described as "including" another element throughout this specification, it means the former may further include the latter rather than excluding other elements unless otherwise specifically provided herein. The term "portion" used in this specification means software field-programmable gate array (PFGA) or hardware such as application-specific integrated circuit (ASIC), and may be configured to perform certain roles. However, the term "portion" is not limited to the software or hardware, and may be configured to be in an addressable storage medium, or may be configured to reproduce one or more processors. Thus, as an example, the term "portion" includes elements such as software elements, object-oriented software elements, class elements and task elements, and processes, functions, features, procedures, sub-routines, segments of program codes, drivers, firmware, micro codes, circuits, data, database, data configurations, tables, arrays and variables. The functionality provided in the elements and or portions may be coupled to a smaller number of elements and parts or further divided into additional elements and portions.

With reference to accompanying drawings, exemplary embodiments will be described in detail for those skilled in the art to work the present disclosure without difficulty. The exemplary embodiments may be achieved in various forms, and are not limited to the embodiments provided herein. To clearly describe the exemplary embodiments, those unrelated to the description have been omitted, and like reference numerals denote like elements throughout this specification.

FIG. 1 illustrates an example of a digital signage system to which a digital signage system according to an exemplary embodiment may be applied, and FIG. 2 illustrates an example for explaining problems of a related art digital signage system.

Referring to FIG. 1, a digital signage system according to an exemplary embodiment may include an electronic apparatus 1 which generates a content and a display apparatus 2 which receives the content to display thereon. For convenience of description, the electronic apparatus 1 is illustrated in the drawing as directly providing a content file to the display apparatus 2, but not limited thereto. For instance, the electronic apparatus 1 may transmit the generated content file directly or via a server to the display apparatus 2.

The electronic apparatus 1 may be configured to generate an image content for digital signage based on an input user command. The electronic apparatus 1 may provide a user a graphical user interface (GUI) including a plurality of menu items for producing or creating an image content. To this end, the electronic apparatus 1 may include a separate display. The image content may include at least one static sub content and at least one dynamic sub content.

The display apparatus 2 may be configured to, if the user produces the image content by using the electronic apparatus 1 and transmits a content package, which includes a content file corresponding to the produced image content and image and motion image files corresponding to respective sub contents 100a to 100d, execute the received content file to display the image content produced by the user. The image content may be transferred by transmitting the content package generated to correspond to the image content at the electronic apparatus 1 from the electronic apparatus 1 to the display apparatus 2 through various methods, such as streaming, download and play and so on, which are file transmission technologies well-known in the art.

The display apparatus 2, which provides the image content, may be configured by any one of a monitor manufactured for digital signage, a television (TV), a large format display (LFD), a liquid crystal display (LCD), a thin film transistor-liquid crystal display (TFD LCD), an organic light-emitting diode (OLED), a flexible display, a field emission display (FED), and a three-dimension (3D) display.

The content package may include the image and motion image files and the content file. The image and motion image files may include image files corresponding to respective static sub contents 100a, 100b and 100d, and a motion image file corresponding to a dynamic sub content 100c. The content file may include meta information on at least one of positions, sizes and times that the static sub contents 100a, 100b and 100d and the dynamic sub content 100c are displayed. Also, the content file may be created in a hypertext markup language (HTML), an extensible hypertext markup language (XHTML), or extensible markup language (XML)-based web document. The display apparatus 2 is configured to execute the content file generated at the electronic apparatus 1 to process and display the static sub contents and the motion image file.

The electronic apparatus 1 may transmit the produced image content to the display apparatus 2 via a communicator. With the communicator, the produced image content may be directly transmitted by wired to the display apparatus 2 via a signal line, as illustrated in the drawing. Also, the produced image content may be transmitted by wireless to the display apparatus 2 by using a wireless communication or to a remote display apparatus 2 through a server via a network, such as local area network (LAN), wide area network (WAN) and so on.

The electronic apparatus 1, which is an apparatus for digital signage management, may be configured by a desktop computer that can communicate with other devices, a laptop computer, a tablet PC, a wireless phone, a mobile phone, a smart phone) an e-book reader, a portable multimedia player (PMP), a potable game machine, a navigation device, a digital camera, a digital multimedia broadcasting (DMB) player, a digital audio recorder, a digital audio player, a digital picture recorder, a digital picture player, a digital video recorder, a digital video player, etc.

The display apparatus 2 may also be configured to provide a command input from the user to the electronic apparatus 1. In other words, the digital signage system according to an exemplary embodiment may provide information that the user needs, based on interactions between the display apparatus 2 and the user, such as receiving a user command, such as a touch, a gesture and so on. For instance, if information, such as age, gender and the like of the user is provided to the electronic apparatus 1 through the display apparatus 2, the electronic apparatus 1 may collect interests by age and/or gender and control to display the image content based on the collected interests.

A related art digital signage management apparatus provides a content package to the display apparatus 2. However, the content package includes both image files corresponding to a plurality of static sub contents 100a, 100b and 100d and a motion image file corresponding to a dynamic sub content 100c which are included in an image content, and a content file is configured to control the display apparatus 2 to process and display respective sub contents one by one. Since times that the static sub contents 100a, 100b and 100d and the dynamic sub content 100c are processed are different each other and only a basic background is displayed on the display apparatus 2 until the static sub contents 100a, 100b and 100d are processed and displayed thereon, the display apparatus 2 can be seen as being flickering. Also, there is a problem in that as the content package increases in size, time and bandwidth required to transmit the content package increase, thereby more wasting the time and the bandwidth.

Referring to FIG. 2, a process in which in a page change, a background is displayed, static sub contents 200a and 200b are displayed, and then a dynamic sub content 200c is displayed is illustrated. While the sub contents 200a, 200b and 200c are processes when one page are changed to another, only a background in which is blanked out is displayed. Since the blanked-out background is not related with contents to be displayed on another page, information which is passed on to the user is cut off, so that the user feels like that the display apparatus flickers.

To resolve this problem, the electronic apparatus 1 according to an exemplary embodiment generates a single image in which at least one static sub content 200a and/or 200b are included, and transmits to the display apparatus 2 a content package, which includes a content file for executing the image content, a single image file including the single image, and a motion image file including the dynamic sub content 200c. According to this, in the page change, the display apparatus 2 may first display the single image including the at least one static sub content 200a and/or 200b selected by the user, as a background and then display the dynamic sub content 200c on the displayed single image, so that the at least one static sub content 200a and/or 200b is preferentially displayed instead of the basic background, thereby reducing the phenomenon like that the screen of the display apparatus flickers.

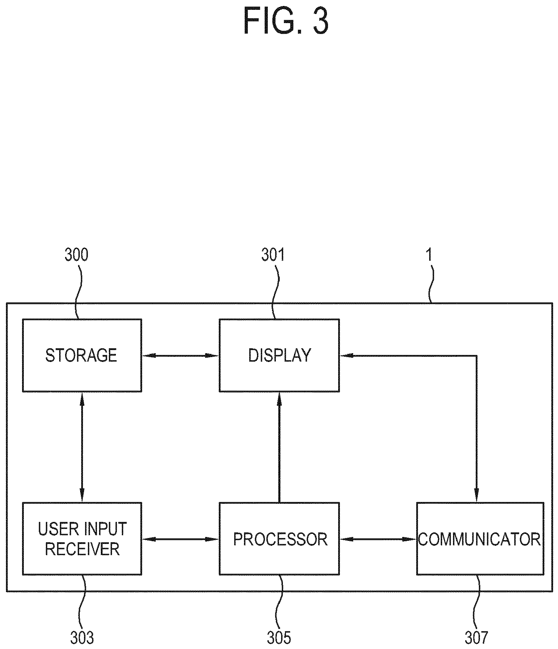

Hereinafter, respective components of the electronic apparatus 1 will be described in detail with reference to FIG. 3.

FIG. 3 is a block diagram showing an electronic apparatus according to an exemplary embodiment.

The electronic apparatus 1 may be configured to generate the image content based on a command input from the user and to provide the generated image content to the external display apparatus 2. The image content may include a single image in which all static sub contents or at least one static sub content is combined, as a background in order to resolve the problem, such as flicker or the like, occurred in the page change.

The electronic apparatus 1 may include a storage 300, a display 301, a user input receiver 303, a processor 305 and a communicator 307.

The display 301 is configured to display an image based on an image signal under a control of the processor 305. In an exemplary embodiment, the display 301 may be configured to provide the user a graphic user interface (GUI) including a production tool for producing an image content, that is, a plurality of menu items for producing the content. The display 301 may include a display panel on which the image is displayed, and a light source, such as a backlight unit, which supplies a light to the display panel. The display 301 may further include a driver which supply a power to the display panel and the light source to drive the display panel and the light source. The display 301 may be configure to, if the display panel is configured by a non-light emitting element, supply the light from the light source to the display panel to display the image, and to, if the display panel is configured by a self-light emitting element, directly supply the power to the display panel from a driving circuit.

The user input receiver 303 may be configured to receive a user input or command via a mouse, a keyboard or the like to provide to the processor 305. Further, the user input receiver 303 may directly receive a manipulation command via a manipulation panel, or receive a remote control signal having a user manipulation command therein from a remote controller. Also, the user input receiver 303 may be implemented in a form of a touch pad or by a touch screen which senses a user touch input on the display 301. The user may produce and edit the image content by using the user input receiver 303.

The communicator 307 is configured to communicate with the outside. To be more specific, the communicator 307 may provide the produced image content to the external display apparatus 2. To this end, the communicator 307 is provided to be connectable with the external display apparatus 2, the network or the like. The communicator 307 may include a plurality of connection ports according to various standards, such as high definition multimedia interface (HDMI), universal serial bus (USB), etc. The communicator 307 may communicate by wired with a plurality of severs via a wired local area network (LAN). Also, the communicator 307 may communicate by wireless. To communicate by wireless, the communicator 307 may include a radio frequency (RF) circuit to transmit and receive a RF signal. The communicator 307 may perform wireless communication through one or more wireless network selected from among wireless fidelity (Wi-Fi), Bluetooth (BT), Zigbee, Ultra-Wide Band (UWM), Wireless USB, and Near Field Communication (NFC).

The communicator 307 may further include an antenna for receiving an image signal from the outside, and a tuner, a demodulator and so on for processing the image signal received via the antenna to provide image information. The communicator 307 may be configured to receive at least one signal selected from among a terrestrial signal, a satellite signal and a cable signal. Also, the communicator 307 may receive a broadcasting signal via a digital broadcasting system, such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), etc. The received broadcasting signal is processed and provided to the display 301 to display an image included therein. The display 301 may configured to display the image based the processed broadcasting signal.

The storage 300 is configured to store various data to be used at the electronic apparatus 1. To be more specific, the storage 300 may store various files, such as image files, motion image files and the like, which are used by the user to produce the image content. The storage 300 is configured to, if the image content is produced by a user manipulation to the electronic apparatus 1, store a content package including a content file for executing the image content, an image file and motion image files. As described above, the content package according to an exemplary embodiment may include a content file having a form of web document created by Web programming language, such as XML or the like, an single image file including the single image in which static sub contents included in the image content are combined, and motion image files corresponding to dynamic sub contents, respectively. The external display apparatus 2 may process respective sub contents by using the web document of the content file and display for the user to watch.

The storage 300 may be provided with a nonvolatile memory, which can remain data even if the power supplied to the electronic apparatus 1 is shut off and which can write data to store changed matter. That is, the storage 300 may be provided with any one of a flash memory and an erasable programmable read-only Memory (EPROM) or an electrically erasable programmable read-only Memory (EEPROM).

The processor 305 is configured to control a general operation of the electronic apparatus 1. To be more specific, the processor 305 may be configured to provide the GUI including the plurality of menu items for producing the image content via the display 301 and to produce the image content having a plurality of pages based on a user input on the GUI via the user input receiver 303. Also, the processor 305 is configured to generate a single image in which at least one static sub content in the image content is included, to generate a content package, which includes a single image file corresponding to the single image, at least one motion image file corresponding to at least one dynamic sub content which is displayed on the single image, and a content file for executing the image content, and to control the communicator 307 to transmit the generated content package to the external display apparatus 2.

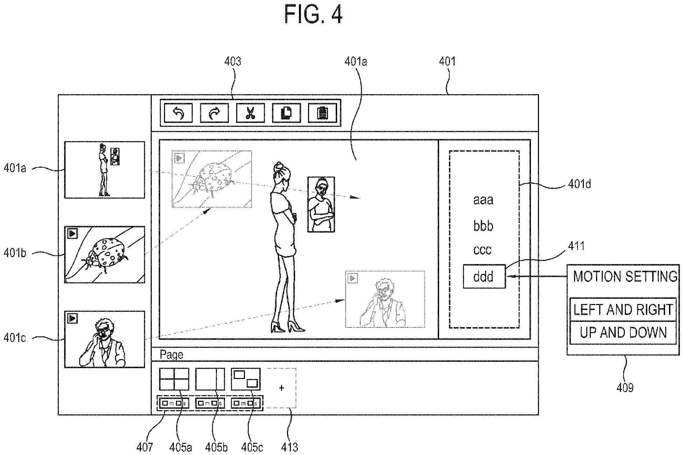

FIG. 4 illustrates an example of an image content production tool provided via a display according to an exemplary embodiment.

The electronic apparatus 1 may display a GUI including a plurality of menu items 401, 403, 405, 407, 409, and 411 via the display 301. The user may manipulate the GUI through the user input receiver 303 to produce an image content that she/he wants.

The GUI may include a plurality of first thumbnails 401a to 401c corresponding to images or motion images of a plurality of sub contents, respectively, a text box 401d, an editing item 403 for editing the image content, a plurality of second thumbnails 405a to 405c corresponding to a plurality of pages, respectively, an changing time-editing item 407 for editing a changing time of pages, and a page adding item 413. To produce the image content, the user may select one second thumbnail from among the plurality of second thumbnails 405a to 405c corresponding to the plurality of pages, respectively, or select the page adding item 413, and then insert and edit sub contents that she/he wants by using the first thumbnails 401a, 401b and/or 401c corresponding to the sub contents.

The insertion of the sub contents may be performed by an intuitive method. For example, the sub contents may be incorporated by a simple manipulation, such as a drag and drop method, which selects one first thumbnail from among the plurality of first thumbnails 401a, 401b and 401c corresponding to the plurality of sub contents at a left side of the current page and drags and drops the selected first thumbnail to and into the current page. Also, the user may insert a text that she/he wants into the current page by setting a position and a size of the text box 401d through a mouse or the like and inserting contents of the text through a keyboard.

After inserting the sub contents, the user may edit the inserted sub contents by using the page adding item 413. The editing of the sub contents may include scaling up and down, moving, rotating, copying, cutting, etc., and be intuitively and simply performed by using the editing item 403 or directly manipulating the inserted sub contents. Also, the editing may include setting up an animation to a text by using a motion setting item 409 to move the text up and down or left and right. The text to which the movement is added according to the animation setting is classified as a dynamic sub content. The animation movement of the text is not limited to the up and down or left and right movement. Various movements may be applied as animation settings to the text based on technologies known in the art.

As described above, the image content may include the plurality of pages, and the respective pages may have different sub contents or the respective sub contents may be differently arranged every page. Each page may be set to be changed to a next page after a certain amount of time. The user may set the amount of time that each page remains by using the changing time-editing item 407.

If the user produce the image content by using the GUI, a content file, which includes meta information for display the static sub content and the dynamic sub contents on the display apparatus 2, and a content package, which includes the content file, an image file corresponding to a single image including the static sub content, and motion image files corresponding to the dynamic sub contents included in the image content, are generated.

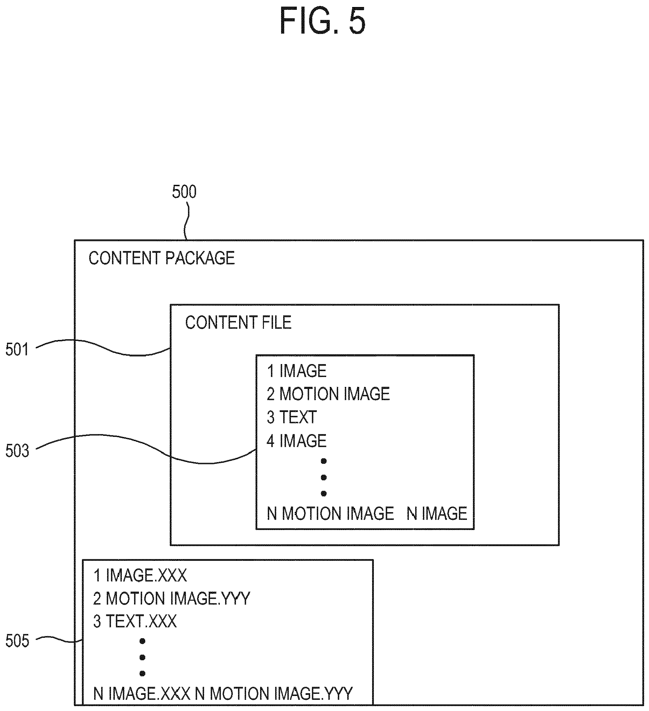

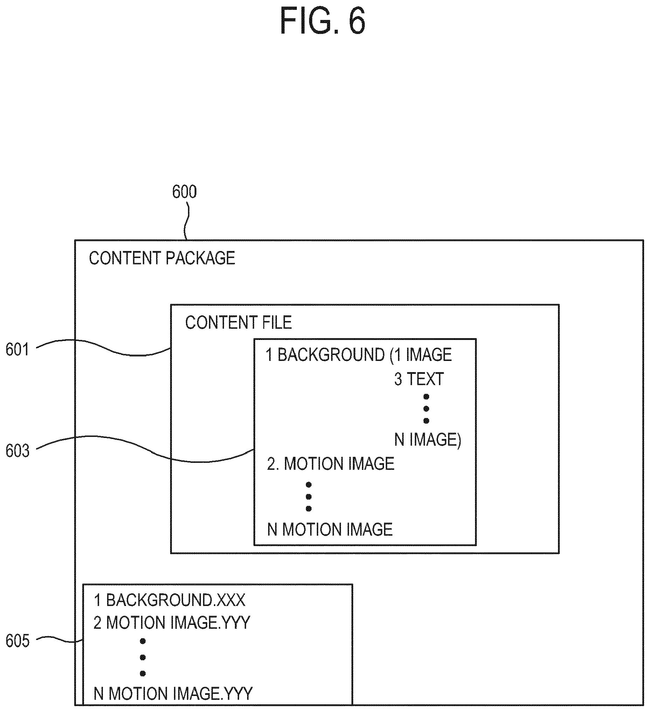

FIG. 5 illustrates an example of a related art content package, and FIG. 6 illustrates an example of a content package generated and provided at an electronic apparatus according to an exemplary embodiment. The drawings explain content packages 500 and 600 including content files 501 and 601 and image and/or motion image files 505 and 605, respectively, and configurations of the content packages 500 and 600 and meta information 503 and 603 included therein are not limited thereto.

Referring to FIG.5, an example of a related art content package 500 is illustrated. A content file 501 may include meta information 503 on sub contents to be displayed and positions, times, sizes and so on that the sub contents are displayed, respectively. The content package 500 may include a content file 501 including the meta information 503, and image and motion image files 505 corresponding to the sub contents to be displayed.

In the related art, the image and motion image files 505 and the content file 501 including the meta information 503 for displaying the sub contents are included in the content package 500, which is transmitted to the display apparatus 2 from the digital signage management apparatus. The content file 501 is configured to control the display apparatus 2 to load and process the image and motion image files 505. Thus, as described above, since the times that the image and motion image files 505 are processed at the display apparatus 2 are different and when the image content having the plurality of pages is changed from one page to another while displaying the image content, the sub contents are displayed according to the processed order after the basic background is first displayed, the problem that the screen flickers may has been occurred. Also, as the image and motion image files 505 included in the content package 500 are increased, the content package may increase in size, and the problem that the time required to transmit the content package more increase may therefore has been occurred.

To resolve these problems, the electronic apparatus 1 according to an exemplary embodiment generates a content package 600 if the user produces the image content including the plurality of sub contents by using the GUI. The content package 600 includes a single image including at least one, for example, a plurality of static sub contents, and meta information for displaying at least one, for example, a plurality of motion images and the single image. Referring to FIG. 6, an example of a content package 600 according to an exemplary embodiment is illustrated. The content package 600 includes a content file 601 including meta information 603, and single image and motion image files 605 including a single image used as a background and a plurality of motion images, respectively. The meta information 603 is configured to display the single image corresponding to the background, which includes a plurality of images and/or texts as the plurality of static sub contents, and the plurality of motion images, which are a plurality of dynamic sub contents.

The content package 600 according to an exemplary embodiment includes the single image file corresponding to the background and the at least one, that is, the plurality of motion image files corresponding to the plurality of dynamic sub contents, even if the plurality of static sub contents exists in the image content. Therefore, the content package, which is transmitted to the display apparatus 2, decreases in size, as compared with the related art content package 500. Accordingly, the display apparatus 2 first displays the single image in which the plurality of static sub contents are included, as the background and then processes the plurality of dynamic sub contents, such as the plurality of motion images, to display on the single image, thereby improving the phenomenon like that the screen of the display apparatus flickers and reducing times required to transmit the content package and to process the single image and motion image files 605 to display the image content.

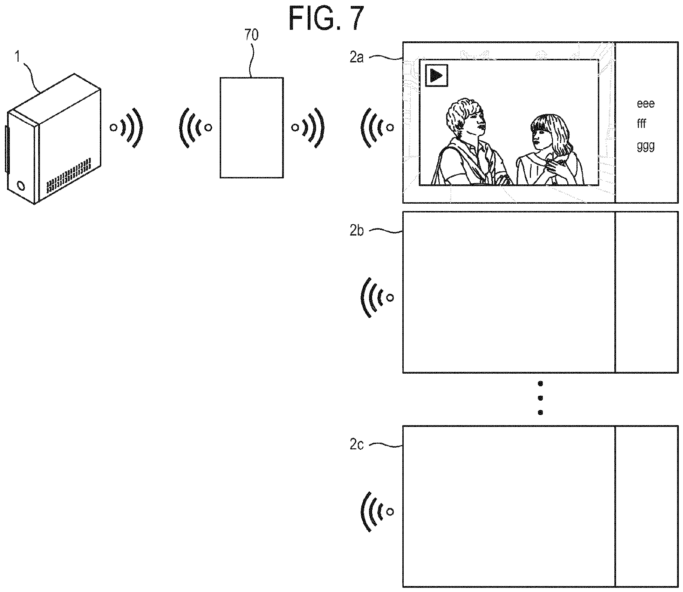

FIG. 7 illustrates an implemented example of a digital signage system according to an exemplary embodiment

It is described above that, if the image content is generated at the electronic apparatus 1, the generated image content may be provided to the display apparatus 2 to display thereon. In an exemplary embodiment, the electronic apparatus 1 may be configured to transmit the content package corresponding to the generated image content to a server 70 and the server 70 may configured to transmit the received content package to at least one, for example, a plurality of display apparatuses 2a to 2c, which are communicated with the server 70.

The display apparatuses 2a to 2c may perform a role of digital signages to provide the user the image content, and as described above, the display apparatuses 2a to 2c may perform interactions with the user and collect information to provide the server 70. The server 70 may configured to transmit the content package to the display apparatus 2 to display on the display apparatus 2 a new image content received from the electronic apparatus 1 based on the collected information.

The display apparatuses 2a to 2c, which communicate with the server 60, may be synchronized with each other to display the image content, or display different image contents received from the server 70.

The electronic apparatus 1, the server 70, the display apparatus 2a to 2c may directly communicate with one another by wired or wireless, or communicate with one another via the network, respectively. The content package 600 generated at the electronic apparatus 1 is provided to the respective display apparatuses 2a to 2c via the server 70. The electronic apparatus 1 also may receive the information collected based on the interactions, from the respective display apparatuses 2a to 2c, or transmit a control command or a new content package 600 based on the collected information to the respective display apparatuses 2a to 2c via the server 70.

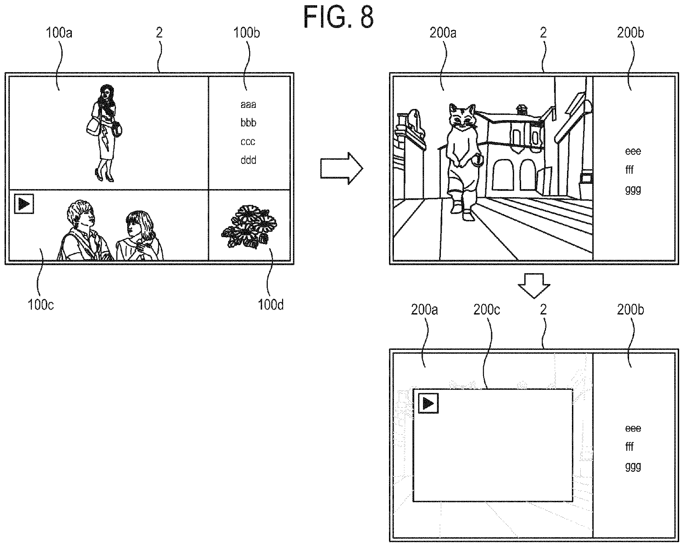

FIG. 8 illustrates an example of changing pages are according to an exemplary embodiment.

If the user produces the image content by manipulating the electronic apparatus 1, the electronic apparatus 1 transmits a content package 600 including a content file 601 to the display apparatus 2, and the display apparatus 2 executes the content file 601 to display the image content. The content package 600 includes files corresponding to a single image including at least one, for example, a plurality of static sub contents 200a and 200b, and at least one, for example, a dynamic static sub content 200c, and the content file 601, which includes meta information 603 on display of the sub contents 200a to 200C.

As described above, the image content may be configured to have a plurality of pages. A picture on an upper left corner of FIG. 8 corresponds to a first page of the image content. When the first page is changed to a second page, a single image, which includes the static sub contents 200a and 200b of the second page is displayed, as in a picture on an upper right corner. After the dynamic sub content 200c is processed, the dynamic sub content 200c is displayed on the single image including the static sub contents 200a and 200b, as in a picture on a lower right corner and the page change is completed.

Unlike FIG. 2, in FIG. 8 is not displayed the basic background. The user therefore cannot see that the screen flickers.

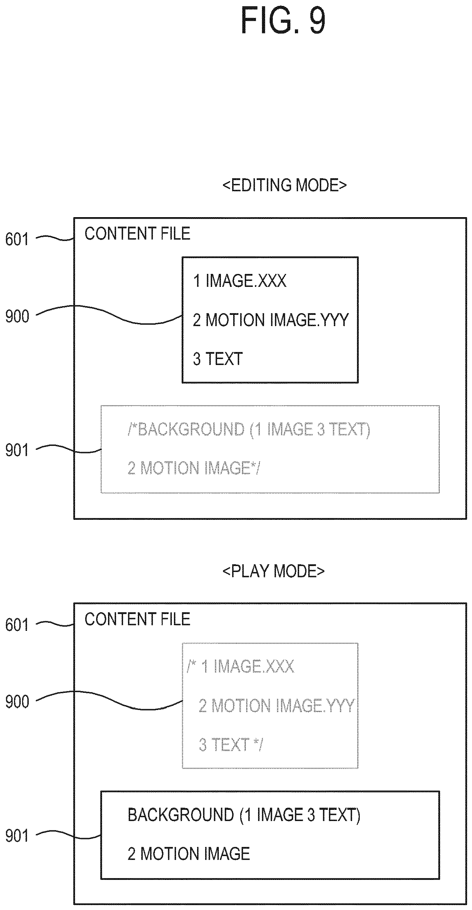

FIG. 9 illustrates an example that a content file is differently applied based on modes according to an exemplary embodiment.

As described with reference to FIGS. 5 and 6, a content file 601 may include meta information 603 on positions, times and so on that respective sub contents 200a to 200c are displayed, and the electronic apparatus 1 and the display apparatus 2 may display an image content by using the content file 601 in which the meta information 603 is included, respectively.

However, objects for which the electronic apparatus 1 and the display apparatus 2 display the image content are different. For instance, the electronic apparatus 1 displays the image content via the display 301 to enable the user to edit the image content, whereas the display apparatus 2 displays the image content to transfer the user information, such as digital signage advertisements.

For this reason, when the image content is displayed at the display apparatus 2, the single image including the plurality of static sub content 200a and 200b is displayed as the background and the dynamic sub content 200c is processed to display on the single image, in order to improve the flicker of the screen in the page change. However, the electronic apparatus 1 displays the image content to edit the image content, for example, to insert the sub contents 200a to 200c and change the sub contents 200a to 200c in position and size. If the static sub content 200a and 200b are displayed as the background of the single image, as in the display apparatus 2, the image content cannot be efficiently edited.

Accordingly, the content file 601 according to an exemplary embodiment may be configured to include a plurality of modes based on positions to be executed. To be more specific, the content file 601 may be operated in an editing mode in which the static sub contents 200a and 200b are identified as separate objects, respectively, at the electronic apparatus 1, and in a play mode in which the static sub contents 200a and 200b are identified as a single object at the display apparatus 2.

Referring to FIG. 9, illustrates an example of a content file 601, which includes meta information 603 for processing the respective sub contents 200a to 200c according to an exemplary embodiment. As described above, if the user produces the image content to include the plurality of sub contents 200a to 200c by manipulating the electronic apparatus 1, the content file 601 for controlling the respective sub contents 200a to 200c to display at at least one of positions, sizes and times set up by the user are generated based on a web programming language, such as XML, HTML and so on.

Referring to FIG. 9, an example of a content file having the editing mode and the play mode is illustrated. If the content file 601 is executed at the electronic apparatus 1, the content file 601 is operated in the editing mode. In the editing mode, the plurality of sub content 200a to 200c are identified as separate objects, respectively, and at this time, the user may invoke each static sub content 200a, 200b or 200c to edit as the user wants. Since the storage 300 of the electronic apparatus 1 stores images and motion images corresponding to the plurality of sub content 200a to 200c, respectively, the user may invoke and edit each sub content 200a, 200b or 200c. At this time, a construction 901, which identifies all the plurality of static sub content 200a and 200b as the background of the single image, are processed as an annotation not to have an effect on the electronic apparatus 1.

If the content file 601 is executed at the display apparatus 2, the content file 601 is operated in the play mode. In the play mode, the plurality of static sub content 200a and 200b are identified as the background of the single image. Files corresponding to the single image processed as the background and the motion image is received from the electronic apparatus 1, and in the page change, the single image including the plurality of static sub content 200a and 200b, not the basic background, is first displayed as the background and then the dynamic sub content 200c is displayed on the single image. At this time, a construction 900, which identifies the plurality of sub content 200a to 200c as separate objects, are processed as an annotation not to have an effect on the display apparatus 2.

Although the content file 601 according to an exemplary embodiment has been explained as being implemented in the plurality of modes by using the annotation function used in the web document, this is just an example and is not limited thereto. For instance, various implemented examples of the content file 601 may exist, which at the electronic apparatus 1, identify the plurality of static sub contents 200a and 200b as separate objects to edit the image content and at the display apparatus 2, identify the plurality of static sub contents 200a and 200b as a single object so that the plurality of static sub contents 200a and 200b is included in the single image to first display the single image and then display the dynamic sub content 200c on the single image in the page change.

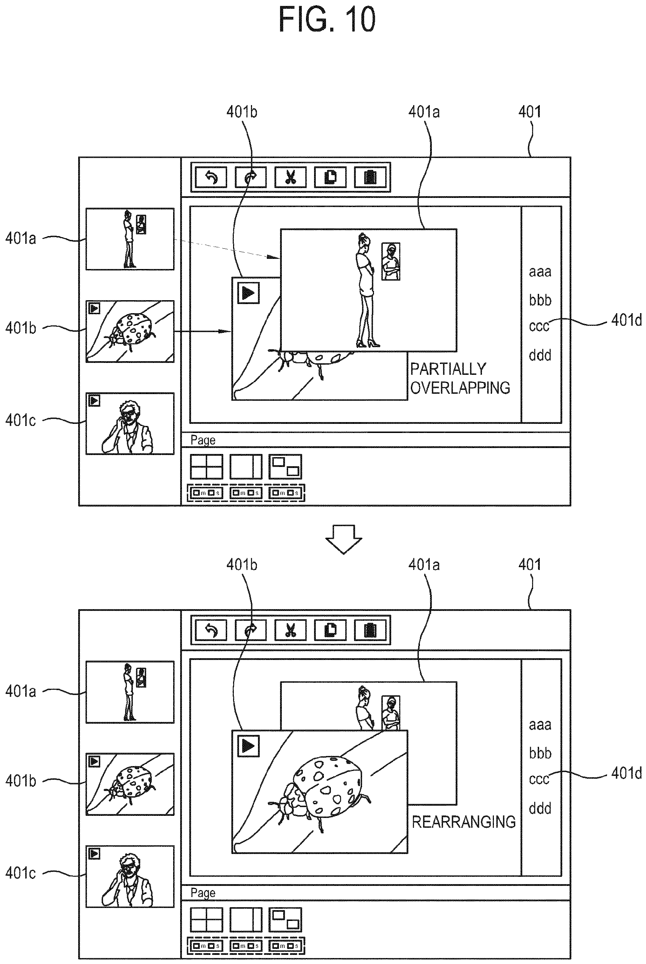

FIG. 10 illustrates a concrete example of an image content production tool, which is operated not to cover a dynamic sub content with a static sub content according to an exemplary embodiment.

If a static sub content 401a is positioned to cover at least a portion of at least one dynamic sub contents 401b and/or 401c, for example, 401b, according to a user manipulation, the static sub content 401a cannot be used in generating a single image in which the static sub content 401a is included together with another static sub content 401d.

Accordingly, the electronic apparatus 1 according to an exemplary embodiment may be configured to, if the user positions the static sub content 401a to cover the at least a portion of the dynamic sub contents 401b, rearrange the sub contents 401a and 401b to place the dynamic sub contents 401b on top in a relation overlapped with the static sub content 401a.

Referring to an upper picture of FIG. 10, an example of rearranging the sub contents 401a and 401b to place the dynamic sub contents 401b on top if after positioning the dynamic sub contents 401b, the user places the static sub content 401a above the already positioned dynamic sub contents 401b.

As described above, a text 401d is classified as a static sub content, but if an animation is set up to the text 401d, for example, to move up and down or left and right, classified as a dynamic sub content. Accordingly, in this case, if the static sub content 401a is positioned to covers the moving text 401d, the text 401d may be rearranged to place on top in a relation overlapped with the static sub content 401a

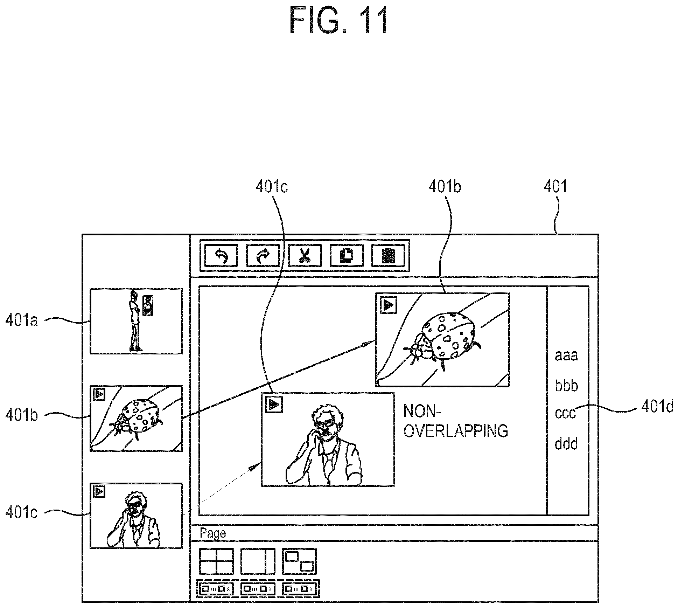

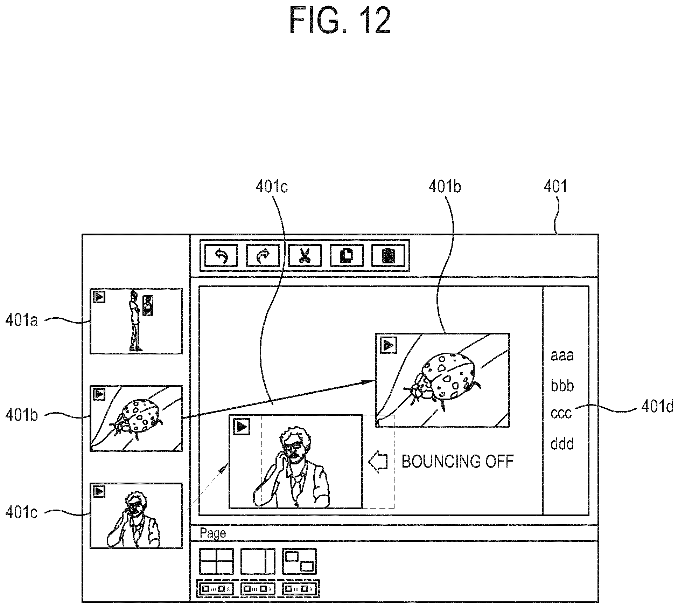

FIGS. 11 and 12 illustrate concrete examples of an image content production tool, which is operated not to overlap dynamic sub contents each other according to an exemplary embodiment;

It is described above that the dynamic sub contents 401b and 401c may be prioritized to place on top. To prevent portions of the dynamic sub contents 401b and 401c from overlapping each other, the electronic apparatus 1 according to an exemplary embodiment may be controlled so that if after positioning a dynamic sub content 401b, the user places another dynamic sub content 401c above the already positioned dynamic sub contents 401b, the other dynamic sub content 401c is not overlapped with the already positioned dynamic sub content 401b.

Referring to FIG. 11, an example in which even if after positioning a dynamic sub content 401b, the user moves another dynamic sub content 401c to cover a portion of the already positioned dynamic sub content 401b, the moving other dynamic sub content 401c is not overlapped with the already positioned dynamic sub content 401b, is illustrated.

Referring to FIG. 12, an example in which if after positioning a dynamic sub content 401b, the user moves another dynamic sub content 401c to cover a portion of the already positioned dynamic sub content 401b, the moving other dynamic sub content 401c bounces off the already positioned dynamic sub content 401b, is illustrated.

What the electronic apparatus 1 controls the dynamic sub contents 401b and 401c not to overlap with each other is not limited to the drawings and above-described explanations. Also, the text 401d is classified as a static sub content, but if an animation is set up to the text 401d, for example, to move up and down or left and right, classified as a dynamic cub content, and so the text 401d may be controlled not to overlap with the other dynamic sub content 401b and 401c.

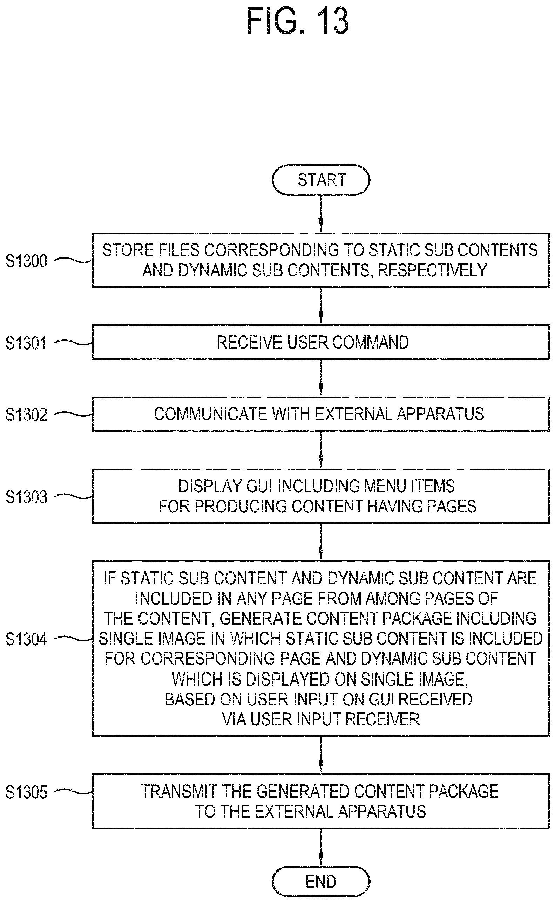

FIG. 13 is a flow chart showing an operation of an electronic apparatus according to an exemplary embodiment.

Referring to FIG. 13. at an operation S1300, the processor 305 stores files corresponding to a plurality of static sub contents and a plurality of dynamic sub contents, respectively. At an operation S1301, a user command is received via a user input receiver 303. At an operation S1302, the communicator 307 communicates with the external apparatus. At an operation S1303, the processor 305 provides a GUI including a plurality of menu items for producing a content having a plurality of pages. At an operation S1304, if at least one static sub content and at least one dynamic sub content are included in any page from among the plurality of pages of the content, the processor 305 generates a content package including a single image in which the at least one static sub content is included for the corresponding page and the at least one dynamic sub content which is displayed on the single image, based on a user input on the GUI received via the user input receiver. Lastly, an operation S1305, the processor 305 controls the communicator 307 to transmit the generated content package corresponding to the content to the external apparatus.

In the above exemplary embodiment, the explanation on operation has been given for a case in which the electronic apparatus 1 and the like, is used. However, if a program that defines the operations of such an electronic apparatus 1 is applied to a conventional personal computer and an information terminal device and the like, such a personal computer and the like can function as the an electronic apparatus 1 and the like of the exemplary embodiments.

In addition, how to distribute such a program is optional, and for example, the program may be stored in a non-transitory computer-readable recording medium, such as a compact disc read-only memory (CD-ROM), a digital versatile disc (DVD), a magneto optical disc (MO), or a memory card for the distribution, or may be distributed via a communication network such as Internet.

As described above, the electronic apparatus 1 according to exemplary embodiments may provide the image content generated in such a manner that the at least one static sub content is incorporated in the single image, thereby first displaying the single image and then displaying the at least one dynamic sub content on the single image when the image content is changed from one page to another page at the external display apparatus 2. As a result, when the image content having the plurality of pages is transmitted to the display apparatus 2 and displayed at the display apparatus 2, the technical problems resulting from the page change and/or the content transmission can be prevented.

While the exemplary embodiments have been shown and described with reference to various embodiments thereof, it will be understood by those skilled in the art that various changes in form and details may be made therein without departing from the scope of the present disclosure as defined by the appended claims and their equivalents.

## Claims

1. An electronic apparatus comprising:
a storage arranged to store files corresponding to a plurality of static sub contents and a plurality of dynamic sub contents, respectively;
a user input receiver arranged to receive a user input;
a communicator arranged to communicate with an external apparatus; and
a processor arranged to:
provide a user interface (UI) comprising a plurality of menu items for producing an executable content having a plurality of pages;
in response to the user input through the UI for selecting at least one static sub content from among the plurality of static sub contents and at least one dynamic sub content from among the plurality of dynamic sub contents with respect to a page among the plurality of pages of the content, generate a single image including the selected at least one static sub content with respect to the page so that the single image is treated as a background of the page on the external apparatus, and
generate an executable content package comprising the single image and the at least one dynamic sub content of the page to be displayed on the single image when the page is to be displayed; and
control the communicator to transmit the generated content package to the external apparatus for display output.

2. The apparatus according to claim 1, wherein the generated content package comprises:
a content file comprising meta information to execute the content; and
files corresponding to the single image and the at least one dynamic sub content included in the content, respectively.

3. The apparatus according to claim 2, wherein meta information indicates a plurality of modes based on positions where the content file is executed; and
a first mode from among the plurality of modes, identify the at least one static sub content included in the content as a separate object to edit respective one of the at least one static sub content in response to the content file being executed.

4. The apparatus according to claim 3, wherein the content file is configured to:
at a second mode from among the plurality of modes, treat all the at least one static sub content included in the content as a background, and
identify all the at least one static sub content as an object in response to the content file being executed at the electronic apparatus.

5. The apparatus according to any one of claims 2 to 5, wherein the meta information comprises information on at least one of positions, sizes and times that the at least one static sub content and/or the at least one dynamic sub content included in the content are displayed.

6. The apparatus according to any one of claims 2 to 5, wherein the meta information comprises information for displaying the at least one dynamic sub content on the single image after displaying the single image when the external apparatus executes the content.

7. The apparatus according to any one of claims 1 to 6, wherein the at least one static sub content comprises at least one of an image and/or a text.

8. The apparatus according to any one of claims 1 to 7, wherein the at least one dynamic sub content comprises at least one of a motion image, a flash image, and/or a text on which an animation is set.

9. The apparatus according to any one of claims 1 to 8, wherein the UI further comprises a time setting item for setting up a time that one of the plurality of pages is changed to another one of the plurality of pages.

10. The apparatus according to any one of claims 1 to 9, wherein the processor is further configured to, in response to the at least one dynamic sub content included in the content partially overlapping with the at least one other static sub content therein, rearrange the at least one dynamic sub content on the UI to display on top, while the content is edited by a user via the UI.

11. The apparatus according to any one of claims 1 to 10, wherein the processor is configured further to, in response to the content comprising the plurality of dynamic sub contents, display the plurality of dynamic sub contents not to overlap each other on the UI, while the content is edited by a user via the UI.

12. A control method of an electronic apparatus comprising:
storing files corresponding to a plurality of static sub contents and a plurality of dynamic sub contents, respectively, for an external apparatus;
receiving a user input;
providing a user interface (UI) comprising a plurality of menu items for producing an executable content having a plurality of pages;
in response to the user input through the UI for selecting at least one static sub content from among the plurality of static sub contents and at least one dynamic sub content from among the plurality of dynamic sub contents being included in a page from among the plurality of pages of the content produced, generating a single image including the selected at least one static sub content with respect to the page so that the single image is treated as a background of the page on an external device, and
generating an executable content package comprising the single image and the at least one dynamic sub content of the page to be displayed on the single image when the page is to be displayed; and
transmitting the generated content package to the external apparatus for display output.

13. The method according to claim 12, wherein the generated content package comprises:
a content file comprising meta information to execute the content; and
files corresponding to the single image and the at least one dynamic sub content included in the content, respectively.

14. The method according to claim 13, wherein the meta information comprises information on at least one of positions, sizes and times that the at least one static sub content and/or the at least one dynamic sub content included in the content are displayed.

15. The method according to claim 13 or 14, wherein the meta information comprises information for displaying the at least one dynamic sub content on the single image after displaying the single image when the external apparatus executes the content.
